# EUROPEAN PATENT APPLICATION

(11) **EP 1 295 536 A1**
(43) Date of publication of application: **26.03.2003**
(21) Application number: 01203615.8
(22) Date of filing: 21.09.2001
(51) Int. Cl.: A23L 2/02, A23L 2/52, A23L 1/30, A23L 1/06, A23L 1/10, A23L 1/304

(54) **Process for the fortification of a fruit based food product with calcium**

(71) Applicant: Purac Biochem B.V., 4200 AA Gorinchem (NL)
(72) Inventor: Bouman, Simone Johanna, 4286 EA Almere (NL); Bontenbal, Elize Willem, 6701 CE Wageningen (NL)
(74) Representative: Jorritsma, Ruurd

(57) **Abstract**

The present invention relates to a process for the fortification of food products containing fruit, such as fruit juices, concentrates, syrups or spreads with calcium. According to this process an inorganic calcium salt and a calcium salt of an organic acid are added to the fruit containing food product. In particular this method is suitable for food products with fruit containing anthocyanins, such as cranberries. A preferred combination of calcium salts is a calcium salt of lactic acid with calcium chloride.

## Description

The present invention relates to a process for the fortification of food products containing fruit such as fruit juices, concentrates, syrups or spreads with calcium.

Such processes are known from the prior art. In WO 00/28838 a calcium fortified juice based nutritional beverage is described containing depectinized fruit juice and a source of calcium selected from natural milk mineral, calcium lactate gluconate or mixtures thereof. The beverage can further contain nutrients such as vitamins. In EP 397 232 also a nutritional beverage containing fruit juice is described wherein as a calcium source calcium chloride, calcium carbonate or calcium-citrate-malate is used.

US 6,086,927 describes a process for preparing a calcium enriched food product by subsequently mixing in water or fruit juice of calcium hydroxide, a phosphorus based acid, calcium lactate and calcium phosphate. The mixture comprises about 40 wt.% of total calcium derived from calcium hydroxide, about 15 wt.% of total calcium derived from calcium lactate and about 45 wt.% of total calcium derived from calcium phosphate.

The problem which arises when calcium compounds are added to fruit based food products is that color changes can occur, in particular in case of juices or concentrates obtained from fruit containing pH sensitive color pigments such as for instance anthocyanins. Anthocyanins are stable at low pH. At higher pH a discoloration from red or blue to brown occurs. This is undesirable. Besides color stability it is required that the fortified products have a stable and acceptable flavor.

The object of the invention is to provide a process for the fortification of food products containing fruit with calcium such that the color and preferably also the flavor of the food product is acceptable and remains stable over a longer period of time.

The invention thus provides a process for fortifying food products containing fruit with calcium, comprising adding to the food product an inorganic calcium salt and a calcium salt of an organic acid. Preferably, 15 to 85 wt.% of total calcium added is supplied by the inorganic calcium salt, more preferably 15 to 50 wt.% of total calcium added is supplied by the inorganic calcium salt.

The calcium salt of an organic acid is preferably selected from calcium salts of suitable food grade carboxylic acids, in particular lactic acid, gluconic acid, citric acid, malic acid, fumaric acid, tartaric acid, adipic acid or mixtures thereof, most preferably lactic acid. Examples of these calcium salts are calcium lactate, calcium gluconate, calcium citrate (monocalcium citrate, dicalcium citrate, tricalcium citrate, sodium calcium citrate, potassium calcium citrate, ammonium calcium citrate), calcium citrate/malate, calcium malate, calcium amino acid chelates and calcium fumarate.

The calcium salt of organic acid can also be obtained by in situ formation by addition of the organic acid or a potassium, sodium and/or ammonium salt thereof and calcium hydroxide, calcium hydrate and/or calcium carbonate to the food product.

The inorganic calcium salt is preferably selected from calcium chloride, calcium phosphate (monocalcium phophate, dicalcium phosphate, tricalcium phosphate, sodium calcium phosphate, potassium calcium phosphate, ammonium calcium phosphate), calcium sulfate, calcium hydroxide, calcium hydrate, calcium carbonate and mixtures thereof, preferably calcium chloride, calcium phosphate or calcium sulfate, most preferably calcium chloride. It should be noted that if the calcium salt of organic acid is formed in situ, the inorganic calcium salt is selected from calcium chloride, calcium phosphate or calcium sulfate.

When the inorganic calcium salt is calcium chloride or calcium phosphate, it can also be obtained by in situ formation, by addition of calcium hydroxide, calcium hydrate and/or calcium carbonate in combination with phosphoric acid or a potassium, sodium and/or ammonium salt thereof and/or hydrochloric acid.

As a source for inorganic calcium salts also nature derived calcium sources can be used such as milk calcium, sea weed calcium or calcium obtained from shells. These products contain for example calcium carbonate or calcium phosphate.

According to a further aspect the invention relates to a process as described above wherein the inorganic calcium salt is a calcium phosphate selected from mono calcium phosphate, dicalcium phosphate, tricalcium phosphate, sodium calcium phosphate, potassium calcium phosphate, ammonium calcium phosphate and the amount of calcium supplied by the calcium phosphate is 15 to 100 %. These salts can also be formed in situ, as described above.

The invention also relates to the calcium enriched food product obtained with the process described above, which contains an added inorganic calcium salt and an added calcium salt of an organic acid, wherein preferably 15 to 85 wt.% of total added calcium is supplied by the inorganic calcium salt. Preferably the product contains 50 to 85 wt.% of total added calcium of calcium lactate and 15 to 50 wt.% of total added calcium of calcium chloride. With added calcium is meant the calcium which is not naturally present in one of the raw materials of the food product. This means for instance that when the food product contains milk, the milk calcium already present in the milk is not included in the balance of total added calcium.

The food product containing fruit of the invention includes not only juices, but also fruit concentrates, fruit based beverages, nectars, syrups etc. containing fruit. Food products can also be spreads, which includes spreadable fruit products such as jams, marmalades and fruit fillings.

The process of the invention is particularly suitable for food products based on fruit containing anthocyanins, such as blueberries, bilberries, cranberries, elderberries, strawberries, raspberries, blackberries, blackcurrants, red, black and blue grapes, plums and cherries.

The product obtained after fortification with calcium has a pH lower than 4.5, preferably lower than 3.5, in particular between 2.5 and 3.5.

The calcium concentration in the final product after fortification is determined by the recommended values for daily food intake, but is in particular less than 3000 ppm, preferably less than 600 ppm. A suitable calcium concentration in the juice or spread is 400 to 900 ppm.

### Examples

Cranberry juice was fortified with 500 ppm. First calcium lactate was added to the juice and stirred until all was dissolved. Thereafter calcium chloride was added. The pH was measured and the flavor was assessed. The juices were then stored at 35 °C for 40 hours to check color stability.

In Table 1 results of this experiment are shown:

**Table 1**

| Calcium of calcium lactate (ppm) | Calcium of calcium chloride (ppm) | pH | color stability | taste |
|---|---|---|---|---|
| 0 | 0 | 2.67 | | |
| 0 | 500 | 2.53 | very light, watery | chlorine/bitter |
| 100 | 400 | 2.62 | good | chlorine/bitter |
| 200 | 300 | 2.71 | good | chlorine/bitter |
| 300 | 200 | 2.80 | good | good |
| 400 | 100 | 2.91 | good | good |
| 500 | 0 | 3.00 | light/ brownish | tart/astringent |

## Claims

1. Process for fortifying a food product containing fruit with calcium, comprising adding to the food product an inorganic calcium salt and a calcium salt of an organic acid.

2. Process according to claim 1, wherein 15 to 85 wt.%, preferably 15 to 50 wt.% of total calcium added is supplied by the inorganic calcium salt.

3. Process according to claim 1 or 2, wherein the fruit in the food product is a fruit containing anthocyanins.

4. Process according to claim 3, wherein the fruit is selected from blueberries, bilberries, cranberries, elderberries, strawberries, raspberries, blackberries, blackcurrants, red, black and blue grapes, plums and cherries, preferably cranberries.

5. Process according to any of the preceding claims, wherein the calcium salt of an organic acid is selected from calcium salts of lactic acid, gluconic acid, citric acid, malic acid, fumaric acid, tartaric acid, adipic acid and mixtures thereof.

6. Process according to any of the preceding claims, wherein the calcium salt of organic acid is formed in situ in the food product by the addition to the food product of the organic acid or a potassium, sodium or ammonium salt thereof and calcium hydroxide, calcium hydrate or calcium carbonate.

7. Process according to claim 5 or 6, wherein the calcium salt of an organic acid is a calcium salt of lactic acid.

8. Process according to any of the preceding claims, wherein the inorganic calcium salt is selected from calcium chloride, calcium phosphate, calcium sulphate, calcium hydroxide, calcium hydrate, calcium carbonate and mixtures thereof.

9. Process according to any of the preceding claims, wherein the inorganic calcium salt is formed in situ in the food product by addition to the food product of calcium hydroxide, calcium hydrate and/or calcium carbonate and phosphoric acid and/or hydrochloric acid or a potassium, sodium or ammonium salt thereof.

10. Process according to claim 8 or 9, wherein the inorganic calcium salt is calcium chloride.

11. Process according any of the preceding claims, wherein the food product after fortification with calcium has a pH lower than 4.5, preferably lower than 3.5.

12. Process according to any of the preceding claims, wherein the calcium concentration in the food product after fortification is less than 3000 ppm, preferably less than 600 ppm.

13. Process according to claim 1, wherein the inorganic calcium salt is a calcium phosphate selected from mono calcium phosphate, dicalcium phosphate, tricalcium phosphate, sodium calcium phosphate, potassium calcium phosphate, ammonium calcium phosphate and the amount of calcium supplied by the calcium phosphate is 15 to 100 % of total calcium.

14. Calcium enriched food product containing fruit, containing an added inorganic calcium salt and an added calcium salt of an organic acid, wherein 15 to 85 wt.% of total calcium added is supplied by the inorganic calcium salt.

15. Calcium enriched food product according to claim 14, containing 50 to 85 wt.% of total calcium added of calcium lactate and 10 to 50 wt.% of total calcium added of calcium chloride.

16. Calcium enriched food product according to claim 14 or 15, which is a juice, concentrate, beverage, syrup, nectar or spread.
